(19) Europäisches Patentamt
European Patent Office
Office européen des brevets

(11) Publication number: **0 422 334 A1**

(12) **EUROPEAN PATENT APPLICATION**

(21) Application number: **90110987.6**

(22) Date of filing: **11.06.90**

(51) Int. Cl.⁵: **G02B 25/00, B43L 7/00, A63H 5/00**

(30) Priority: **13.10.89 CN 89218060**

(43) Date of publication of application:
**17.04.91 Bulletin 91/16**

(84) Designated Contracting States:
**DE FR GB IT**

(71) Applicant: **Leung, Yee Tok**
**Ingenuity Limited, No. 8 4/F, Mansfield**
**Industrial Centre, Hong Yip Street**
**Yuen Long, N.T.(HK)**

(72) Inventor: **Leung, Yee Tok**
**Ingenuity Limited, No. 8 4/F, Mansfield**
**Industrial Centre, Hong Yip Street**
**Yuen Long, N.T.(HK)**

(74) Representative: **Brown, John David et al**
**FORRESTER & BOEHMERT**
**Widenmayerstrasse 4/I**
**W-8000 München 22(DE)**

(54) **Scientific ruler.**

(57) There is disclosed an educational instrument such as a ruler, the body of which comprises a first lens (3) and an aperture within which aperture is removably mounted a second lens (7). The second lens (7) may, in use, be removed from the aperture and aligned with the first lens (3) for magnification purposes. There may also be provided any one of a magnetic compass, a watch or an electric calculator, dimensioned so as to also be removably mounted within the aperture. The body of the instrument may be provided with stencil holes (6) to act as a template for drawing various symbols and portions of the instrument may be transparent and angled so as to form a prism (2), (11). The instrument may also comprise teeth (5) of varying length along a portion of one edge thereof which may be used not only as a comb but, by oscillation of the teeth (5), may be used to produce a series of notes corresponding to the length of the teeth (5). One edge of the body may be curved to form a protractor (1) and the body may also comprise a thermometer (10).

FIG. 1

Xerox Copy Centre

## SCIENTIFIC RULER

This invention instrument is about a versatiled applied scientific ruler.

A conventional measurement ruler engraved with Metric and British scaling on both sides can only be used for measurement and drawing purposes. For another conventional functional instrument with the geometrical symbols on the body such as circle, square, triangle and arithmetical symbols, it can not be promoted to creative and teaching purposes.

The main idea of this new invention is to provide a new functional ruler with fixed concave lens and movable convex lens that can be moved out from the ruler and align with the former lens as a telescope.

The other idea of this new invention is to provide a magnetic compass fixed on the position of convex lens.

The other idea of this new invention is to provide a protractor on the flange of the concave lens other than the conventional Metric and British scaling marked on the ruler.

The other idea of this new invention is to provide a comb with different length of teeth which can produce different tone of sound.

The other idea of this new invention is to provide an arithmetric symbols, different size of rectangles and wave curve on the body of the ruler.

The other idea of this new invention is to provide a flat type thermometer and a declined surface as a prism on the flange side.

The other idea of this new invention is to provide a label for signing their own name and cartoon feature.

The multi-function and versatility of this scientific ruler can be easily illustrated by the following drawing. .

Fig. 1 : The plan view of the scientific ruler

Fig. 2 : The bottom view of the ruler

Fig. 3 : The simple arrangement of convex lens and concave lens as a telescope

Fig. 4 : The example of forming a rainbow spectrum by the prism

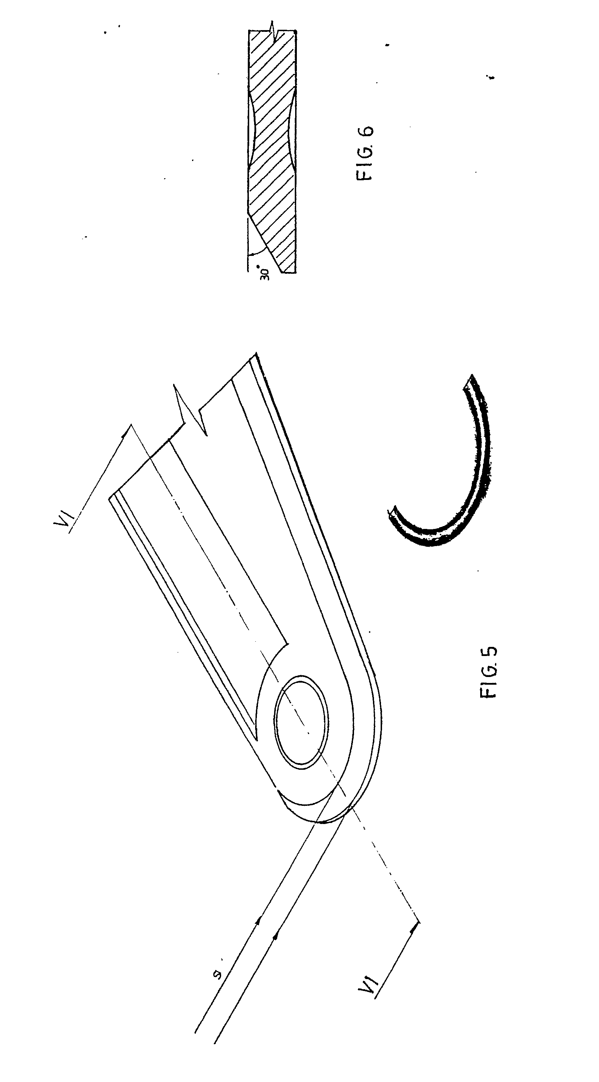

Fig. 5 : The example of forming a rainbow spectrum by the prism on the protractor's side

Fig. 6 : The cross section view of VI-VI

Fig. 7 : The replacement of the convex lens by the magnetic compass

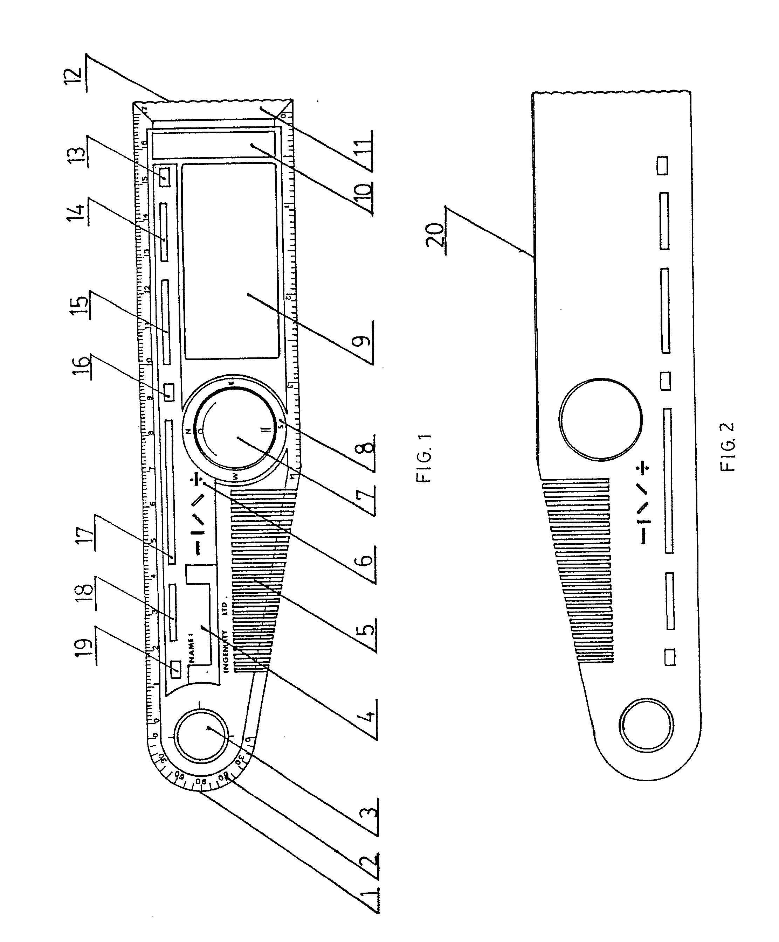

From figure 1

1. Protractor
2. Declined surface
3. Concave lens
4. Name plate
5. Comb
6. Templat symbol
7. Convex lens
8. Symbol of direction
9. Space for sticker
10. Thermometer
11. Declined surface
12. Wave curve side
13-19. Different size of rectangle
20. Step edge for easy pick-up

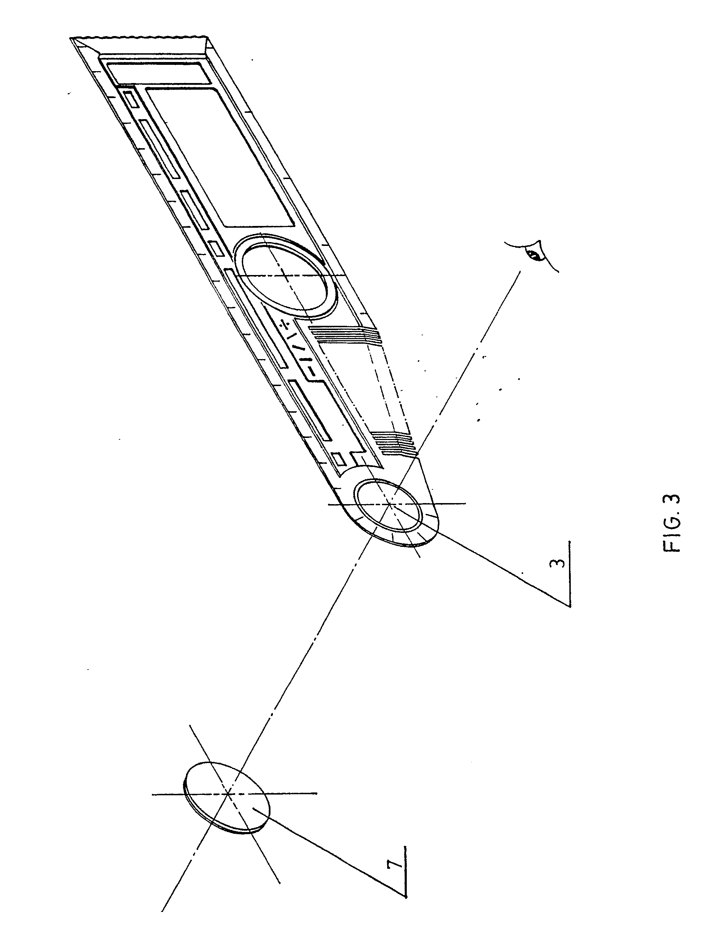

The convex lens 3 is built-in the body of the ruler and the convex lens 7 is movable type which can be fixed on the circle shape size-as-fitted hole on the body. As illustrated on figure 3, the convex lens 7 can be pressed out from the hole and align with the concave lens to form as a telescope. Whereas both optical lens are not designed for the purpose of telescope. Therefore, there is no telescope body needed. Basically it can be used as an optical instrument.

The semi-circle-shape protractor with one division as ten degree totally 180 of full scaling is based on the co-ordinate engraved on the edge of the convex lens.

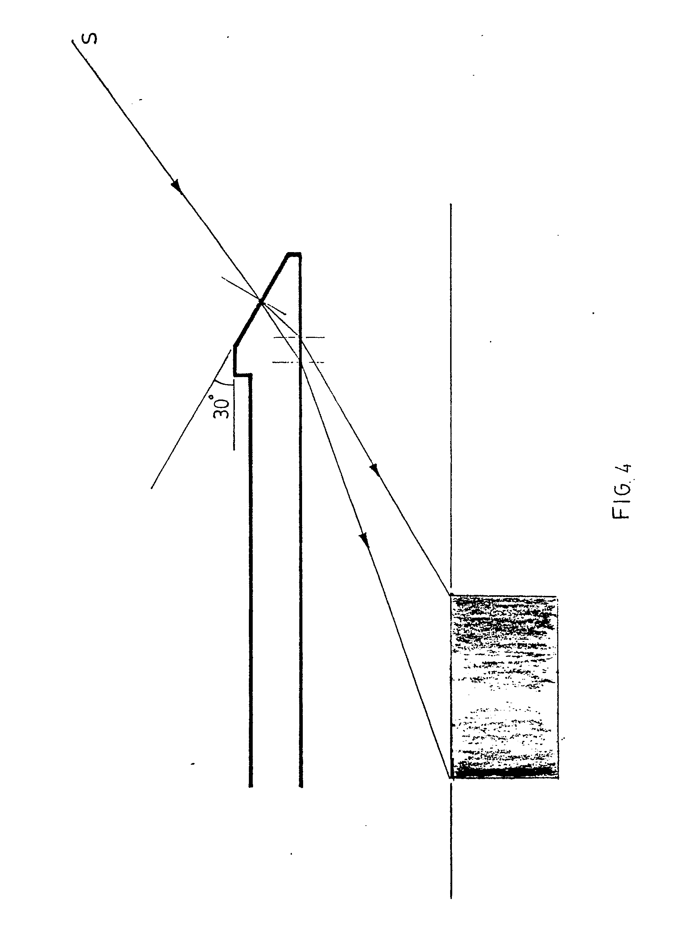

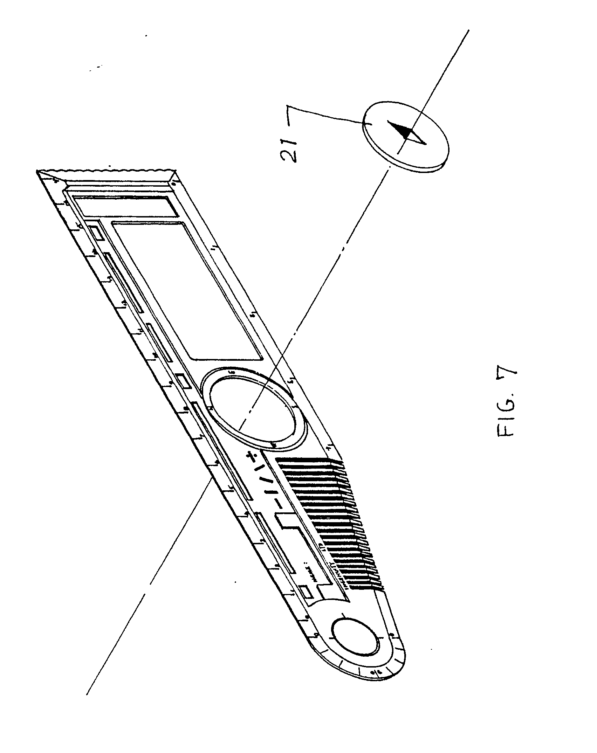

The prism next to the wave curve, as illustrated on figure 4, the declined angle is about 25 - 35 but 30 is better. While the sun light projects on the declined surface, the white light will be broken up into rainbow spectrum. The other side of the ruler, i.e. the protractor 1 with the simular surface 2 about 25 - 35 . Due to the semi-circle shape of the protractor, the spectrum is also formed with semi-circle. Therefore it could be used as an optical teaching instrument. The figure 6 is illustrating the cross-section of the declined surface and the convex lens that could be replaced by the magnetic compass 21.

The comb 5 as shown is placed between the flange side of concave lens 5 and the convex lens 7. The teeth of the comb is arranged from the shortest to the longest i.e. from the concave lens to the convex lens. Due to the different length of the teeth, it can produce different sound by the end of the teeth. Therefore it can be used as an acoustic teaching instrument.

By the aforesaid feature, this scientific ruler is not only multi-funtional and comprehensive but also can increase the interest of students for studying.

In one embodiment of the present invention there is provided a scientific ruler with Metric and British scaling marked respectively on both sides has a concave or convex lens fixed on the body and a movable lens either convex or concave that can be pressed out from the ruler and align with the former lens to form as a telescope.

Preferably the ruler is engraved with circular degree on the arc of the concave lens for measuring angle. That protractor which base on the co-ordinate marked on the arc of the concave lens is engraved with the scalar of one division as ten degree.

The ruler can also be used as a comb having different length of teeth on a flange side of ruler.

The ruler can also be used as a templet with different symbols on it such as wave curve, plus, minus, cross, dividend and different size of rectangles.

Preferably the convex lens has the symbols of east, south, west and north such as E, S, N and W.

If the ruler has teeth it is envisaged that the teeth of the comb may produce different monotone with different frequencies by oscillating them.

Preferably the declined surface on at least one flange sides is formed as a prism that change the sunlight into rainbow spectrum.

In such circumstances it is preferred that the angle of the declined surface to the horizontal is about 25° to 45° approximately.

A paper type thermometer may be attached with the ruler.

A label may be provided for writing down the name and cartoon or special feature sticker attached as well.

Most preferably, the movable convex lens or concave lens can be replaced by a magnetic compass, quartz watch or even electronic calculator.

The features described in the foregoing description, in the following Claims and/or in the accompanying drawings may, both separately and in any combination thereof, be material for realising the invention in diverse forms thereof.

## Claims

1. An educational instrument comprising a body, which body comprises a first lens and an aperture within which is removably mounted a second lens so that, in use, the second lens may be removed from the aperture and aligned with the first lens for magnification purposes.

2. An educational instrument according to Claim 1 which instrument further comprises at least one of a magnetic compass, a watch, and an electric calculator dimensioned to be removably mounted within the aperture.

3. An educational instrument according to Claim 1 or 2 wherein the body is a flat body.

4. An educational instrument according to Claim 3 wherein the flat body has one straight edge which may be used as a ruler.

5. An educational instrument according to Claim 3 or 4, further comprising at least one stencil aperture through the body for use as a template for drawing a symbol.

6. An educational instrument according to any one of Claims 1 to 5 having at least one edge which is transparent and angled so as to form a prism.

7. An educational instrument according to any one of Claims 1 to 6 wherein a portion of the body surrounding the first lens is transparent and angled so as to form a prism.

8. An educational instrument according to any one of Claims 1 to 7 wherein at least a portion of one edge comprises a series of teeth forming a comb.

9. An educational instrument according to Claim 8 wherein the teeth are of varying length and each tooth may be oscillated so as to produce an individual note in relation to the length of the tooth.

10. An educational instrument according to any one of Claims 1 to 9 wherein an edge of the body is curved so as to form a protractor.

11. An educational instrument according to any one of Claims 1 to 10 further comprising a thermometer.

FIG. 1

FIG. 2

FIG. 3

S

30°

FIG. 4

FIG. 6

30°

FIG. 5

s

VI

VI

FIG. 7

8

European Patent
Office

**EUROPEAN SEARCH REPORT**

Application Number

EP 90 11 0987

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 539 515 (JEUX NATHAN)<br>* abstract; page 2, line 15 - page 3, line 34; page 4, lines 15-28; claims 1-3; figures 1,2 *<br>--- | 1,2 | G 02 B 25/00<br>B 43 L 7/00<br>A 63 H 5/00 |
| X | AT-C- 220 391 (FISCHER)<br>* whole document *<br>--- | 1,2 | |
| X | DE-U-1 696 530 (BOEHLER)<br>* whole document *<br>--- | 1,2 | |
| A | FR-A-1 281 707 (AGFA)<br>* whole document *<br>--- | 1-3 | |
| A | US-A-4 190 322 (WORTLEY)<br>* column 1, line 32 - column 2, line 2; column 2, line 23 - column 3, line 39; figures 1-4 *<br>--- | 1,2 | |
| A | US-A-4 314 408 (SHOEMAKER)<br>* abstract; column 6, line 44 - column 7, line 8; figures 1-3 *<br>--- | 1,4-6 | TECHNICAL FIELDS SEARCHED (Int. Cl.5) |
| A | US-A-4 761 835 (CHEN)<br>* abstract; column 2, lines 27-49; column 3, line 34 - column 4, line 1; figures 2,5 *<br>--- | 2,11 | B 43 L 7/00<br>G 01 B 3/00<br>G 02 B 25/00<br>A 63 H 5/00<br>B 43 K 29/00<br>G 04 B 47/00 |
| A | GB-A-2 004 096 (SORNA WATCH)<br>* abstract; page 1, lines 68-122; figures 1-3 *<br>--- | 2 | |
| A | US-A-2 736 097 (COLEMAN)<br>* column 2, lines 34-53; column 2, line 69 - column 3, line 16; figures 1-3 *<br>--- -/- | 1,3,4,6 | |

The present search report has been drawn up for all claims

| Place of search | Date of completion of the search | Examiner |
|---|---|---|
| BERLIN | 24-01-1991 | BEITNER M.J.J.B. |

EPO FORM 1503 03.82 (P0401)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-1 503 337 (SEN-JUNG) <br> * page 1, lines 29-43; figure 1 * <br> --- | 8 | |
| A | US-A-2 442 447 (ZADIG) <br> * whole document * <br> ----- | 9 | |
| | | | TECHNICAL FIELDS SEARCHED (Int. Cl.5) |

The present search report has been drawn up for all claims

| Place of search | Date of completion of the search | Examiner |
|---|---|---|
| BERLIN | 24-01-1991 | BEITNER M.J.J.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)